# EUROPEAN PATENT SPECIFICATION

(11) **EP 2 750 991 B1**
(45) Date of publication and mention of the grant of the patent: **21.10.2015**
(21) Application number: 13779361.8
(22) Date of filing: 12.08.2013
(51) Int. Cl.: B65D 85/804

(54) **SEALED CAPSULE FOR THE PREPARATION OF A BEVERAGE, IN PARTICULAR COFFEE**
VERSIEGELTE KAPSEL ZUR HERSTELLUNG EINES GETRÄNKS, INSBESONDERE KAFFEE
CAPSULE SCELLÉE POUR LA PRÉPARATION D'UNE BOISSON, EN PARTICULIER DU CAFÉ

(30) Priority: 13.08.2012 IT TO20120724
(43) Date of publication of application: 09.07.2014
(73) Proprietor: Luigi Lavazza S.p.A., 10154 Torino (IT)
(72) Inventor: VANNI, Alfredo, 10023 Chieri (Torino) (IT); CABILLI, Alberto, 10024 Moncalieri (Torino) (IT); BUGNANO, Luca, 10024 Moncalieri (TO) (IT)
(74) Representative: Quinterno, Giuseppe
(86) International application number: PCT/IB2013/056579
(87) International publication number: WO 2014/027297

(56) References cited:
- EP-A1- 1 886 942
- WO-A1-2011/117768
- WO-A1-2012/077066

## Description

The present invention relates to a sealed capsule, preferably without an internal filter, for the preparation of a beverage, in particular espresso coffee, by means of introduction of a fluid under pressure, such as hot water and/or steam.

More specifically the invention relates to a sealed capsule of the type comprising:
a cup-shaped body having an essentially planar top flange, radially protruding towards the outside, a lateral wall and a flexible bottom wall, and
a flexible cover welded to the flange of the cup-shaped body so as to define therewith a sealed chamber containing a dose of a granular material, in particular ground roasted coffee, for the preparation of the beverage, in particular espresso coffee;
wherein the granular material is preliminarily compressed within said chamber in a direction perpendicular to the plane containing said flange, such as to form a compact panel of said material, and in said chamber a vacuum is then provided to a degree such that the cover substantially adheres to the upper surface of said panel; and
wherein between the flange and the bottom wall the lateral wall of the cup-shaped body has an annular step formation which provides a local reduction in the cross-section of said chamber towards the bottom wall.

A sealed capsule of this type is known from the document EP 1 886 942 A in the name of the same Applicant. In such a capsule according to the prior art the lateral wall of the cup-shaped body forms an essentially cylindrical upper portion which is connected to an essentially frusto-conical lower portion by means of an annular step formation. The latter forms a reduction in the diameter of the section of said body. This annular step formation is however much closer to the cover and to the corresponding flange than to the bottom wall of the cup-shaped body. Moreover, the radial extension of this step formation is decidedly small, so that it exerts an absolutely negligible effect on the flow of the fluid introduced under pressure into the capsule during the course of preparation of the beverage.

The documents WO 92/07775 and EP 1 783 066 A2 disclose a sealed capsule for the preparation of a beverage, in particular coffee, comprising a cup-shaped body, the bottom wall of which is able to be deformed, without tearing, under the effect of the fluid introduced into the capsule, moving away from the cover so as to come into contact with a perforation device. The capsule described in these documents has an annular lateral wall which is uniformly frusto-conical, without any step formation able to provide a local reduction in the cross-section.

An object of the present invention is to provide a sealed capsule for the preparation of a beverage, in particular coffee, which has improved characteristics.

This object, together with other objects, is achieved according to the invention with a sealed capsule of the type initially defined, characterized primarily in that:
the bottom wall of the cup-shaped body is able to be deformed under the effect of the fluid introduced into the capsule, being displaced away from the cover, and in that
said step-like formation is provided closer to the bottom wall of the cup-shaped body than to the aforementioned flange and provides a local reduction in the cross-section of the chamber of at least 25%.

In a sealed capsule according to the present invention, the step formation, as a result of the sudden and significant local reduction in the cross-section, produces a corresponding appreciable increase in the speed of the fluid through the capsule, in particular in the vicinity of the bottom wall, this being able to facilitate the deformation of this wall towards the associated perforation device. As a result of the solution according to the invention it is therefore possible to perform effective extraction of the beverage, despite the fact that, owing to pre-compaction of the granular material in the capsule, this material offers a certain resistance to the flow of the fluid under pressure and results in a corresponding loss of head.

Further characteristic features and advantages of the invention will become clear from the following detailed description provided purely by way of a non-limiting example, with reference to the accompanying drawings in which:

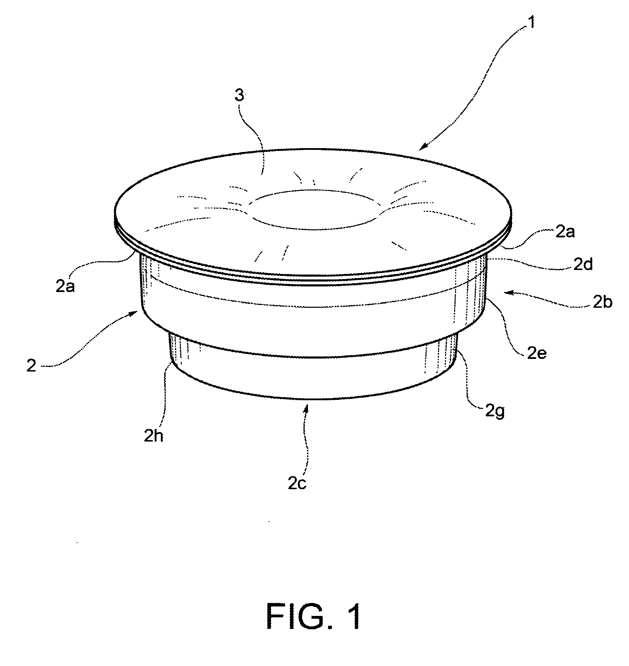

Figure 1 is a perspective view of a sealed capsule according to the present invention;
Figure 2 is a cross-sectional view along the line II-II of Figure 1; and
Figure 3 is a cross-sectional view similar to that shown in Figure 2 and shows a variation of embodiment.

In the drawings, 1 denotes overall a sealed capsule according to the present invention for the preparation of a beverage, in particular espresso coffee, by means of introduction of a fluid, typically hot water and/or steam, under pressure.

The capsule 1 comprises a cup-shaped body 2 which has at the top an essentially planar flange formation 2a radially protruding towards the outside.

The body 2 may be conveniently made for example with a multilayer laminated structure, with an internal layer of polypropylene, an intermediate layer of EVOH (ethylene vinyl alcohol copolymer) and an external layer of polypropylene.

The cup-shaped body 2 has a lateral wall, denoted overall by 2b, and a flexible bottom wall 2c.

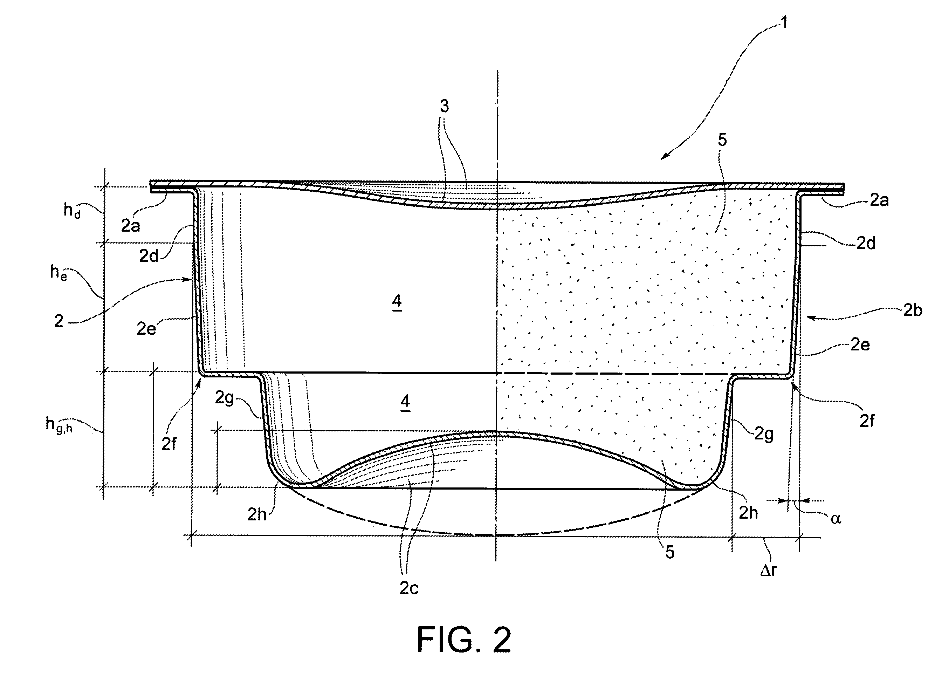

With reference in particular to Figure 2, in the embodiment shown, the lateral wall 2b of the cup-shaped body 2 has an essentially cylindrical upper portion 2d, followed by an essentially frusto-conical portion 2d, which tapers gradually towards the bottom wall 2c.

The cylindrical portion 2d has a height which is substantially smaller than the frusto-conical portion 2e. The latter has a tapering angle, indicated by α in Figure 2, conveniently comprised between 0° and 8° and preferably comprised between 2° and 4°.

At the bottom end of the frusto-conical wall portion 2e, the lateral wall 2b of the cup-shaped body 2 has an annular step formation 2f which provides a sudden local reduction in the cross-section of this body, towards the bottom wall 2c. The radial extension Δr of the step-like formation 2f is conveniently such as to provide a local reduction in the internal cross-section of the body 2 of at least 25% and preferably of about 35%.

Under the formation 2f the lateral wall 2b of the cup-shaped body 2 has a lower wall portion 2g which is essentially frusto-conical and is connected to the bottom wall 2c by means of curved and convex profiles 2h.

The height hₑ of the frusto-conical wall portion 2e is preferably approximately equal to or greater than the overall height h_{g,h} of the wall portion 2g and 2h.

The step-like formation 2f is therefore provided closer to the bottom wall 2c than to the flange 2a.

A flexible cover 3 is welded to the flange 2a of the cup-shaped body 2. This cover is for example formed with a multilayer structure, for example an internal layer of polypropylene and an external layer of aluminium.

Welding between the edge of the flexible cover 3 and the flange 2a of the cup-shaped body 2 may be performed by means of heat or ultrasound.

The cover 3 may have for example a thickness of between 30 µm and 90 µm and preferably equal to about 70 µm.

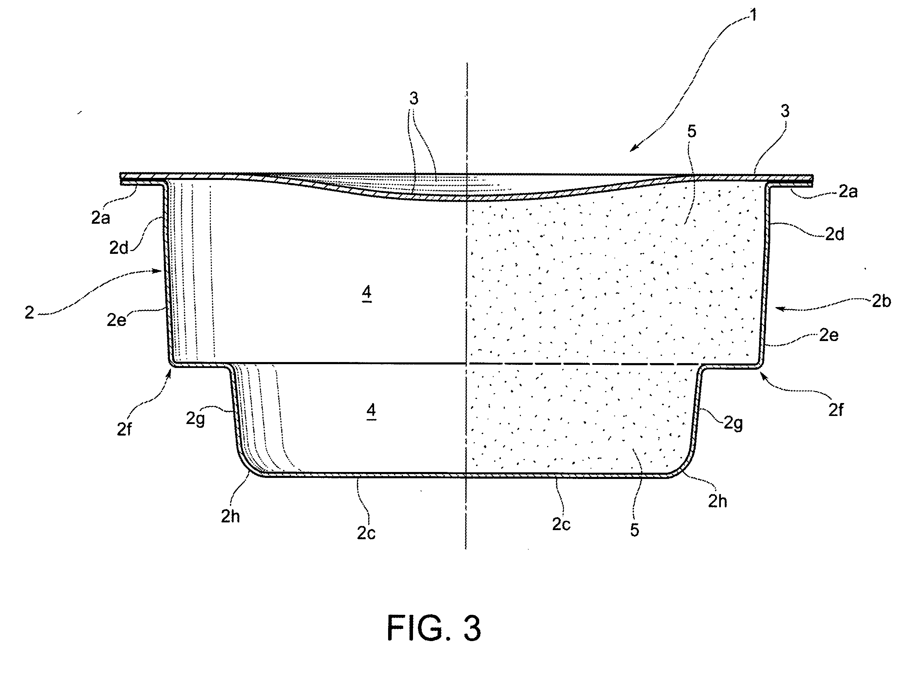

Overall, the flexible cover 3 and the cup-shaped body 2 define a sealed chamber - indicated by 4 in Figure 3 - which is conveniently impermeable to oxygen (O₂) and to moisture.

The chamber 4 of the capsule 1 contains a quantity of granular material 5 for the preparation of a beverage, for example ground toasted coffee for the preparation of espresso coffee.

Preparation of the beverage is performed by means of extraction by introducing a fluid under pressure, in particular hot water and/or steam, using machines which are generally known per se.

Conveniently, according to the invention, the chamber 4 is filled with the granular material 5 which is preliminarily compressed inside this chamber in a direction perpendicular to the plane containing the flange 2a.

The compressive load of the granular material 5 may be for example between 2 and 50 kg per cm² of the average cross-sectional area of the chamber 4.

The compression of the material 5 is performed so as to form a compact panel of said material, namely possessing a certain form stability.

Inside the chamber 4 a vacuum is then provided to a degree such that the flexible cover 3 tends to move towards and tends to adhere to the upper surface of said panel, as illustrated specifically in the right-hand part of Figure 2.

Viewed from the outside, the flexible cover 3 therefore has a concave configuration, with a main deformation or camber which is greater along the axis of the capsule. This deformation or camber may reach values in the region of 3-4 mm.

In the embodiment shown in Figure 2, the bottom wall 2c of the cup-shaped body 2 is curved towards the inside of the capsule and is therefore internally convex and externally concave.

This wall 2c is formed so that it is able to be deformed, under the effect of the fluid introduced under pressure into the capsule, moving away from the cover 3, without however tearing.

In principle, the capsule 1 according to the invention may moreover be used in a machine for extracting the beverage, which is able to perforate the bottom wall 2c of the cup-shaped body 2 before the extraction fluid is injected through the cover 3.

However, the capsule 1 may be advantageously used also in extraction machines known per se, where firstly the cover 3 is perforated for injection of the extraction fluid under pressure. The pressure of this fluid is therefore able to cause a deformation of the bottom wall 2c which comes into contact with perforation devices - known per se - which cause tearing thereof.

In the solution according to Figure 2, the deformation of the bottom wall 2c is such that it passes from the externally concave configuration shown in this figure to an externally convex configuration such as that illustrated specifically in broken lines in the same figure. When extraction of the beverage is performed in this way, the step-like formation 2f of the lateral wall 2b of the capsule body produces, as a result of the sudden and significant local reduction in the cross-section, a corresponding considerable increase in the speed of the fluid through the capsule, in particular in the vicinity of the bottom wall 2c, this being able to facilitate deformation of this wall towards the associated perforation device.

As already mentioned above, this results in effective extraction of the beverage despite the considerable pre-compression of the granular material 5 which offers a certain resistance to the flow of the extraction fluid and results in a corresponding loss of head.

Figure 3 shows a variation of embodiment. In this figure, parts and elements already described have again been assigned the same reference numbers and letters used previously.

The variant shown in Figure 3 differs from that shown in Figure 2 essentially owing to the fact the bottom wall 2c of the cup-shaped body 2 of the capsule is essentially flat, rather than recessed towards the inside of the capsule.

Moreover the variant shown in Figure 3 also has the advantageous characteristic features specifically described above with reference to the capsule shown in Figure 2.

Obviously, without affecting the principle of the invention, the embodiments and the constructional details may be significantly varied with respect to that described and illustrated purely by way of a non-limiting example, without thereby departing from the scope of the invention as defined in the accompanying claims.

## Claims

1. Sealed capsule (1) for the preparation of a beverage, in particular coffee, by introduction of fluid under pressure, comprising:
a cup-shaped body (2) having an essentially planar top flange (2a), radially protruding towards the outside, a lateral wall (2b) and a flexible bottom wall (2c), and
a flexible cover (3) welded to the flange (2a) of the cup-shaped body (2) so as to define therewith a sealed chamber (4) containing a dose of a granular material (5), in particular ground roasted coffee, for the preparation of the beverage, in particular espresso coffee;
wherein the granular material (5) is preliminarily compressed within said chamber (4) in a direction perpendicular to the plane containing said flange (2a), such as to form a compact panel of said material, and in said chamber (4) a vacuum is provided to a degree such that the cover (3) moves towards and at least tends to adhere to the upper surface of said panel; and
wherein between the flange (2a) and the bottom wall (2c) the lateral wall (2b) of the cup-shaped body (2) has an annular step formation (2f) which provides a local reduction in the cross-section of said chamber (4) towards the bottom wall (2c);
the capsule (1) being **characterized in that**:
the bottom wall (2c) of the cup-shaped body (2) is able to be deformed under the effect of the fluid introduced into the capsule (1), being displaced away from the cover (3), and **in that**:
said step-like formation (2f) is provided closer to the bottom wall (2c) of the cup-shaped body (2) than to the flange (2a) and provides a local reduction in the cross-section of said chamber (4) of at least about 25%.

2. Sealed capsule according to Claim 1, wherein said step-like formation (2f) provides a local reduction in the cross-section of said chamber (4) of about 35%.

3. Sealed capsule according to Claim 1 or Claim 2, wherein above the step-like formation (2f) the cup-shaped body (2) has an essentially frusto-conical lateral wall portion (2e) which tapers toward said step-like formation (2f).

4. Sealed capsule according to Claim 3, wherein said lateral wall portion (2e) has a tapering angle (α) comprised between 0° and 8° and preferably comprised between 2° and 4°.

5. Sealed capsule according to Claim 3 or Claim 4, wherein between the frusto-conical lateral wall portion (2e) and said top flange (2a) the cup-shaped body (2) has a cylindrical wall portion (2d).

6. Sealed capsule according to Claim 5, wherein the cylindrical lateral wall portion (2d) has a height (h_{d}) smaller than the height (hₑ) of said frusto-conical lateral wall portion (2e).

7. Sealed capsule according to one of the preceding claims, wherein under the step-like formation (2f) the cup-shaped body (2) has a lower lateral wall portion (2g, 2h) which tapers, in an essentially frusto-conical manner, towards the bottom wall (2c) of said body.

8. Sealed capsule according to Claim 7 and one of Claims 3 to 6, wherein said lower lateral wall portion (2g, 2h) has a height (h_{g,h}) at least approximately equal to or smaller than the height (hₑ) of said lateral frusto-conical wall portion (2e).

9. Sealed capsule according to one of Claims 1 to 8, wherein the bottom wall (2c) of the cup-shaped body (2) is curved towards the inside of the capsule (1).

10. Sealed capsule according to one of Claims 1 to 8, wherein the bottom wall (2c) of the cup-shaped body (2) is essentially flat.

## Patentansprüche

1. Versiegelte Kapsel (1) zur Zubereitung eines Getränks, insbesondere von Kaffee, durch Einleitung eines Fluids unter Druck, die aufweist:
einen napfförmigen Körper (2) mit einem im Wesentlichen ebenen oberen Flansch (2a), der zur Außenseite radial vorsteht, einer Seitenwand (2b) und einer flexiblen Bodenwand (2c) und
eine flexible Abdeckung (3), die mit dem Flansch (2a) des napfförmigen Körpers (2) verschweißt ist, um damit eine versiegelte Kammer (4) zu bilden, die eine Dosis eines körnigen Materials (5), insbesondere gemahlenen gerösteten Kaffees, zur Zubereitung des Getränks, insbesondere Espresso-Kaffee, enthält;
wobei das körnige Material (5) in der Kammer (4) in senkrechter Richtung zu der den Flansch (2a) enthaltenden Ebene vorab so komprimiert ist, dass eine kompakte Füllung aus dem Material gebildet ist, und in der Kammer (4) ein Vakuum in einem solchen Grad vorgesehen ist, dass sich die Abdeckung (3) zur Oberseite der Füllung bewegt und mindestens in der Tendenz daran haftet; und
wobei zwischen dem Flansch (2a) und der Bodenwand (2c) die Seitenwand (2b) des napfförmigen Körpers (2) ein ringförmiges Stufengebilde (2f) hat, das für eine lokale Verringerung des Querschnitts der Kammer (4) zur Bodenwand (2c) sorgt;
wobei die Kapsel (1) **dadurch gekennzeichnet ist, dass**:
die Bodenwand (2c) des napfförmigen Körpers (2) unter der Wirkung des in die Kapsel (1) eingeleiteten Fluids verformt werden kann, wobei sie von der Abdeckung (3) weg verschoben wird, und dadurch, dass:
das stufenartige Gebilde (2f) näher an der Bodenwand (2c) des napfförmigen Körpers (2) als am Flansch (2a) vorgesehen ist und für eine lokale Verringerung des Querschnitts der Kammer (4) von mindestens etwa 25 % sorgt.

2. Versiegelte Kapsel nach Anspruch 1, wobei das stufenartige Gebilde (2f) für eine lokale Verringerung des Querschnitts der Kammer (4) von etwa 35 % sorgt.

3. Versiegelte Kapsel nach Anspruch 1 oder Anspruch 2, wobei über dem stufenartigen Gebilde (2f) der napfförmige Körper (2) einen im Wesentlichen kegelstumpfförmigen Seitenwandabschnitt (2e) hat, der sich zum stufenartigen Gebilde (2f) verjüngt.

4. Versiegelte Kapsel nach Anspruch 3, wobei der Seitenwandabschnitt (2e) einen Kegelwinkel (α) zwischen 0° und 8° und vorzugsweise zwischen 2° und 4° hat.

5. Versiegelte Kapsel nach Anspruch 3 oder Anspruch 4, wobei zwischen dem kegelstumpfförmigen Seitenwandabschnitt (2e) und dem oberen Flansch (2a) der napfförmige Körper (2) einen zylindrischen Wandabschnitt (2d) hat.

6. Versiegelte Kapsel nach Anspruch 5, wobei der zylindrische Seitenwandabschnitt (2d) eine Höhe (h_{d}) hat, die kleiner als die Höhe (hₑ) des kegelstumpfförmigen Seitenwandabschnitts (2e) ist.

7. Versiegelte Kapsel nach einem der vorstehenden Ansprüche, wobei unter dem stufenartigen Gebilde (2f) der napfförmige Körper (2) einen unteren Seitenwandabschnitt (2g, 2h) hat, der sich zur Bodenwand (2c) des Körpers im Wesentlichen kegelstumpfförmig verjüngt.

8. Versiegelte Kapsel nach Anspruch 7 und einem der Ansprüche 3 bis 6, wobei der untere Seitenwandabschnitt (2g, 2h) eine Höhe (h_{g,h}) hat, die mindestens etwa gleich oder kleiner als die Höhe (hₑ) des kegelstumpfförmigen Seitenwandabschnitts (2e) ist.

9. Versiegelte Kapsel nach einem der Ansprüche 1 bis 8, wobei die Bodenwand (2c) des napfförmigen Körpers (2) zum Inneren der Kapsel (1) gewölbt ist.

10. Versiegelte Kapsel nach einem der Ansprüche 1 bis 8, wobei die Bodenwand (2c) des napfförmigen Körpers (2) im Wesentlichen flach ist.

## Revendications

1. Capsule hermétique (1) pour la préparation d'une boisson, en particulier de café, par l'introduction d'un liquide sous pression, comprenant :
un corps en forme de godet (2) possédant une bride supérieure (2a) sensiblement plane, se projetant dans le sens radial vers l'extérieur, une paroi latérale (2b) et une paroi de fond souple (2c), et
un couvercle souple (3) soudé à la bride (2a) du corps en forme de godet (2) de façon à définir avec celui-ci une chambre hermétique (4) contenant une dose de matière en granulés (5), en particulier du café torréfié moulu, pour la préparation de la boisson, en particulier de café espresso ;
dans laquelle ladite matière en granulés (5) est comprimée au préalable dans ladite chambre (4) dans une direction perpendiculaire au plan contenant ladite bride (2a), de manière à former une plaque compacte de ladite matière, et un vide est créé dans ladite chambre (4) dans une mesure telle que le couvercle (3) se déplace vers et a au moins tendance à adhérer à la surface supérieure de ladite plaque ; et
dans laquelle, entre la bride (2a) et la paroi de fond (2c), la paroi latérale (2b) du corps en forme de godet (2) possède une formation en gradin annulaire (2f) qui crée une réduction locale de la section de ladite chambre (4) vers la paroi du fond (2c) ;
la capsule (1) étant **caractérisée en ce que** :
la paroi du fond (2c) du corps en forme de godet (2) est capable de se déformer sous l'action du liquide introduit dans la capsule (1), en s'éloignant du couvercle (3), et
**en ce que** ladite formation en forme de gradin (2f) est prévue plus près de la paroi du fond (2c) du corps en forme de godet (2) que de la bride (2a) et crée une réduction locale de la section de ladite chambre (4) d'au moins environ 25 %.

2. Capsule hermétique selon la revendication 1, dans laquelle ladite formation en forme de gradin (2f) crée une réduction locale de la section de ladite chambre (4) d'environ 35 %.

3. Capsule hermétique selon la revendication 1 ou 2, dans laquelle, au-dessus de la formation en forme de gradin (2f), le corps en forme de godet (2) possède une partie de paroi latérale sensiblement tronconique (2e) qui se resserre en direction de ladite formation en forme de gradin (2f).

4. Capsule hermétique selon la revendication 3, dans laquelle ladite partie de paroi latérale (2e) a un angle de resserrement (α) compris entre 0° et 8° et de préférence compris entre 2° et 4°.

5. Capsule hermétique selon la revendication 3 ou 4, dans laquelle, entre la partie de paroi latérale tronconique (2e) et ladite bride supérieure (2a), le corps en forme de godet (2) possède une partie de paroi cylindrique (2d).

6. Capsule hermétique selon la revendication 5, dans laquelle la partie de paroi latérale cylindrique (2d) a une hauteur (h_{d}) inférieure à la hauteur (hₑ) de ladite partie de paroi latérale tronconique (2e).

7. Capsule hermétique selon l'une des revendications précédentes, dans laquelle, sous la formation en forme de gradin (2f), le corps en forme de godet (2) possède une partie inférieure de paroi latérale (2g, 2h) qui se resserre, sensiblement en forme de tronc de cône, vers la paroi du fond (2c) dudit corps.

8. Capsule hermétique selon la revendication 7 et l'une des revendications 3 à 6, dans laquelle ladite partie inférieure de paroi latérale (2g, 2h) a une hauteur (h_{g,h}) au moins approximativement égale ou inférieure à la hauteur (hₑ) de ladite partie de paroi latérale tronconique (2e).

9. Capsule hermétique selon l'une des revendications 1 à 8, dans laquelle la paroi du fond (2c) du corps en forme de godet (2) est incurvée vers l'intérieur de la capsule (1).

10. Capsule hermétique selon l'une des revendications 1 à 8, dans laquelle la paroi du fond (2c) du corps en forme de godet (2) est sensiblement plate.
